# EUROPEAN PATENT SPECIFICATION

(11) **EP 0 934 483 B1**
(45) Date of publication and mention of the grant of the patent: **26.02.2003**
(21) Application number: 97911255.4
(22) Date of filing: 29.10.1997
(51) Int. Cl.: F16L 3/015, H02G 11/00, E21B 19/08

(54) **HOSE SUPPORTING ARRANGEMENT FOR ACTUATORS OF ROCK DRILL APPARATUS**
SCHLAUCHHALTEVORRICHTUNG FÜR STELLGLIED EINER GESTEINSBOHRMACHINE
DISPOSITIF SERVANT A SUPPORTER DES TUYAUX POUR DES ORGANES DE COMMANDE D'APPAREIL DE PERCAGE DE ROCHER

(30) Priority: 30.10.1996 FI 964380
(43) Date of publication of application: 11.08.1999
(73) Proprietor: Sandvik Tamrock Oy, 33330 Tampere (FI)
(72) Inventor: LAUNIEMI, Markku, FIN-37120 Nokia (FI); TIENARI, Ossi, FIN-39530 Kilvakkala (FI)
(74) Representative: Kaukonen, Juha Veikko
(86) International application number: FI9700662
(87) International publication number: WO98019091

(56) References cited:
- EP-A- 0 525 186
- GB-A- 2 219 981
- US-A- 3 473 769
- US-A- 4 039 032

## Description

The invention relates to an arrangement supporting hoses of a rock drill apparatus that comprises a feed beam, an actuator moving along the feed beam, and hoses between the feed beam and the actuator.

The rock drill apparatus usually comprises several different hoses extending from the carrier or feed beam of the rock drill apparatus to the actuators of the apparatus. These hoses are either hoses for supplying pressure fluid, pressurized air or water, or different cables for supplying electricity or light to and from the actuators. The hoses are interconnected by means of either a protecting tube or different binders or a cable wire extending along the hose bundle with the aim of making the hoses into a rigid bundle. This kind of hose bundle is, however, flexible, and so it hangs between the fastening points by the action of gravity, whereby its position varies and changes with the position of the drill apparatus. This kind of hose bundle is easily caught in different projecting parts during the feed motion, and the hoses also rub and break. A problem encountered in connection with bolting apparatuses is that the hoses are easily caught in a bolt cartridge, whereby the bolts in the cartridge fall and the bolting apparatus is more difficult to use.

One has also sought to solve the problem by using different rollers moving with a drifter or some other such actuator that moves along the feed apparatus, the speed of the roller being half the speed of the drifter or some other such actuator. The solution, however, is rather expensive and requires complicated traversing mechanism and an extra space in the longitudinal direction of the feed beam, which in turn shortens the operating length of the feed machine.

Another still expensive solution is known from EP-A-0 525 186. Furthermore, from US-A-3 473 769 is known a flat elongated member that is connected to a fixed member and to a movable member. The elongated member is intended to support and guide leads such as bases.

The object of the invention is to provide a supporting arrangement for the hoses to eliminate the above drawbacks. The supporting arrangement according to the invention is characterized by comprising a flat elongated supporting member that is coupled at one end to move with the actuator and at the other end along the travel distance of the actuator to be immovable in respect of the feed beam, and that it is coupled at its ends to turn about articulations that are parallel to its broader surface in the transverse direction, and that the distance between the articulations of the supporting member is at least half the travel distance of the actuator, and that the hoses are fastened to the supporting member substantially along its length.

The essential idea of the invention is that a flat flexible supporting member is used to support hoses, the supporting member being coupled at one end to move with an actuator, such as a drifter, and at the other end to a feed beam along the travel distance of the actuator in such a way that its both ends can turn about a transverse axis of the supporting member. Another essential idea is that the hoses are coupled to the supporting member along its length, preferably in such a way that in the direction of the surface of the supporting member the hoses form a single layer so that the supporting member and the hoses can bend together as simply as possible. Yet another essential idea of the invention is that the rigidity of the supporting member is selected such that in all the positions of the rock drill apparatus the supporting member substantially retains its level of bending and does not give way or buckle. Yet another preferred idea of the invention is that in relation to the actuator the supporting member is arranged in such a way that it can bend over the feed beam and the actuator transverse of them.

The advantage of the invention is that the hoses can always be kept in a controlled manner in a predefined position over the entire travel distance of the actuator, such as a rock drill apparatus, whereby the hoses can be effectively prevented from being caught in obstacles and from rubbing and breaking. Further, the hoses hang in the arrangement only between the actuator and the supporting member, and between the actuator and the feed beam, and so they are insignificant to the use and damage. Further, the invention allows the hoses to be always bent in the same predefined way, and so surprises and thereby difficulties and damage resulting from the surprises are avoided.

The invention will be described in greater detail in the attached drawings, where
fig. 1 shows a schematic side view of a rock drill apparatus comprising an arrangement according to the invention,
fig. 2 shows a schematic cross-sectional view of a supporting member and hoses, taken along line C-C indicated in fig. 1, and
fig. 3 shows a schematic top view of the rock drill apparatus according to fig. 1, also illustrating how the hoses and supporting members bend in connection with the arrangement according to the invention.

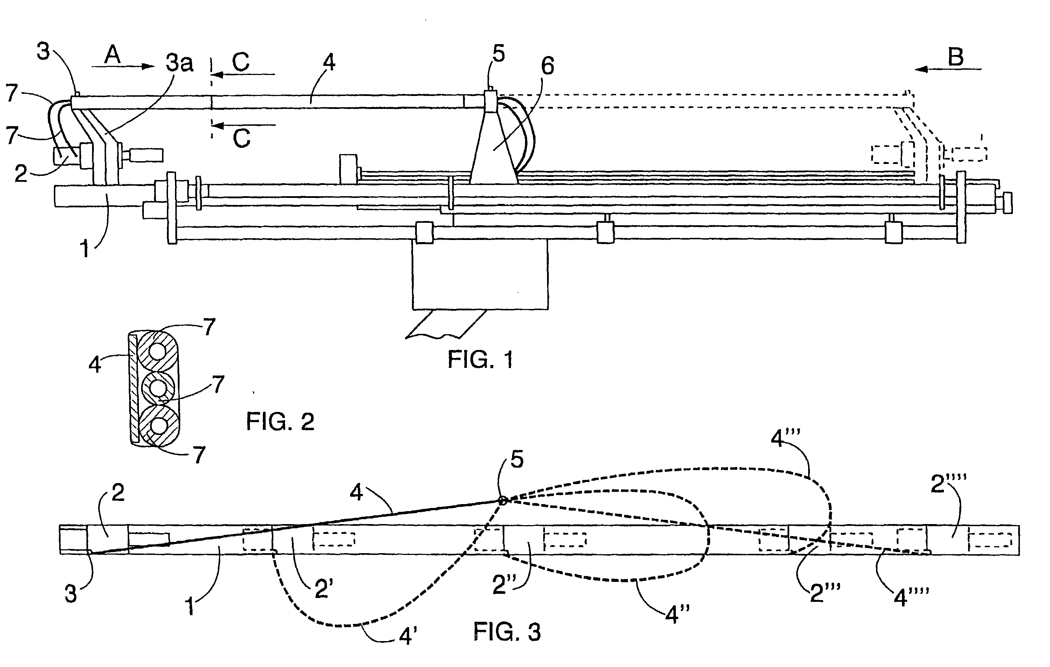

Fig. 1 shows a side view of a typical rock drill apparatus, or bolt feeding apparatus. In the figure, reference number 1 indicates a feed beam along which an actuator 2, here bolt feeding and rotation mechanism, moves; the direction of motion of the actuator in the feed direction is indicated by arrow A and in the reverse direction by arrow B. An articulation 3 is connected to the actuator 2 by means of a supporting arm 3a. To the articulation 3 is connected a supporting member 4, which is a flexible member with a flat, e.g. level cross-section in the axis direction of the articulation 3. The supporting member 4 is connected at its one end via a supporting arm 6 to the feed beam 1 by means of a turnable articulation 5 that is parallel to articulation 3 and immovable with respect to the feed beam. Hoses 7 leading to the actuator 2 are led to the supporting member 4 and coupled to it by suitable fastening means: the hoses are substantially parallel to the supporting member 4 and extend forward from articulation 5 either to a connecting unit installed in connection with the feed beam 1 or directly via the boom (not shown) of the rock drill apparatus to the carrier of the apparatus.

To illustrate an embodiment of the invention, fig. 2 shows a schematic view of the position of the actuator 4 and the hoses 7 in respect on one another, the cross-sectional view being taken along line C-C of fig. 1. As appears from fig. 2, the hoses 7 are in a single layer substantially at the same level in the lateral direction of the supporting member 4, i.e. in the axis direction of the articulations 3 and 5. Consequently, the entity formed by the hoses 7 and the supporting member 4 bends easily in the vertical direction of the supporting member 4, i.e. in fig. 2 about the vertical axis.

Fig. 3 is a schematic view of an arrangement according to the invention in connection with a rock drill apparatus, shown in different positions. As appears from the figure, in the starting position the actuator 2 is at one end of the feed beam 1, i.e. in fig. 3 at the left end. The supporting member 4 and the hoses 7 are substantially direct, as shown in the figure, or at most slightly curved between the articulations 3 and 5. Articulation 5 is here arranged above the feed beam 1, and articulation 3 below the actuator 2, such that the supporting member 4 and the hoses 7 travel diagonally across the feed beam 1. This is possible, since the supporting member is situated above the actuator 2 in the axis direction of the articulations 3 and 5, as shown in fig. 1. When the actuator 2 is moved forward, i.e. in fig. 3 to the right to position 2', it also appears that the supporting member bends as indicated by dotted line 4' in the figure. Further, as the actuator 2 is moved still forward to position 2", the supporting member bends even more, as indicated by dotted line 4" in the figure. At the end of the feed motion the actuator is at position 2"', and the supporting member is bent in the way indicated by dotted line 4"'. In the extreme position at the front end of the feed beam, the actuator can be at the point indicated by 2"", whereby the supporting member is at the position indicated by 4"", and the hoses connected to the supporting member are substantially direct. The articulation of the supporting member 4 coupled to the feed beam is then substantially midway of the moving distance of the actuator 2, and because of the transverse distance between the articulations the supporting member 4 is slightly longer than half the travel distance. The situation indicated by 2"" and 4"" is also shown in fig. 1 by the dotted lines on the right above the figure.

When the supporting member is suitably selected to be a suitably flexible and rigid flat component, the supporting member can be made to bend in the desired manner. For example, the embodiments illustrated in fig. 3 can be easily achieved, for example, by using in the middle part of the supporting member material that is thinner or narrower in the lateral or vertical direction than at the end of the member. In these embodiments, the middle part of the supporting member bends more, and also more easily than the ends. Further, when the supporting member 4 is sufficiently wide and rigid, it can keep the hoses 7 in a suitably bent position without any substantial changes even though the position of the rock drill apparatus changes. Also, if the supporting member 4 is pre-bent in a suitable way, its bending and also its bending direction can be controlled in the desired way. As appears from the figure, the distance between the fastening points, or articulations 3 and 5 of the supporting member must be at least half the travel distance of the actuator in order that the supporting member would work. The supporting member can naturally also be longer, whereby it is suitably curved at the other end of the feed motion, as shown in fig. 3.

The above description and the drawings illustrate the invention only by way of an example, and they are not to be construed as limiting the invention in any way. The rock drill apparatus can be either a drill apparatus comprising a drifter, or a rock bolting apparatus, or some other apparatus associated with rock drilling. The support arrangement according to the invention can be applied to all actuators which move along the feed beam and to which a hose or the like has to be led to make it work. The supporting member 4 can be fastened at its ends to articulations in different ways either directly or via different fastening pieces. The supporting member 4 can be installed directly between the articulations 3 and 5 or on the side of the articulations and spaced from them by means of supporting arms or the like, so that the bending direction and bending properties of the supporting member 4 can be adapted in different ways. Where desired, the supporting member 4 can be curved in the lateral direction and the hoses 7 can be fastened on its concave side, whereby the supporting member 4 bends automatically towards its convex surface and is therefore easy to control. Also, the hoses 7 can also be arranged in more than one layer, if this is found practical in view of the bending properties. The supporting member 4 can preferably be made, for example, of spring steel or some other suitable spring-like metal material. However, it can also be made, for example, by using suitable composite materials, such as carbon fibre structures, or for example combinations of steel and a carbon fibre structure, so as to achieve the shape and thereby the bending properties and rigidity desired. The supporting member can also be made by using parts with a cross-section of even thickness at the ends, and a more flexible part in the middle.

## Claims

1. An arrangement supporting hoses of a rock drill apparatus that comprises a feed beam (1), an actuator (2) sliding along the feed beam (1), and hoses between the feed beam (1) and the actuator (2), **characterized in that** it comprises a flat elongated supporting member (4) that is coupled at one end to move with the actuator (2) and at the other end along the travel distance of the actuator to be immovable in respect of the feed beam (1), and that it is coupled at its ends to tum about articulations (3, 5) that are parallel to its broader surface in the transverse direction, and that the distance between the articulations of the supporting member (4) is at least half the travel distance of the actuator, and that the hoses (7) are fastened to the supporting member (4) substantially along its length.

2. An arrangement according to claim 1, **characterized in that** the supporting member (4) is installed such that its ends are situated on the opposite sides of the actuator in the transverse direction.

3. An arrangement according to claim 1 or 2, **characterized in that** the hoses (7) are arranged in-a single layer in the transverse direction of the supporting member (4).

4. An arrangement according to any one of claims 1 to 3, **characterized in that** the supporting member (4) is pre-bent in the longitudinal direction.

5. An arrangement according to any one of the preceding claims, **characterized in that** the supporting member (4) is thicker at its ends than in the middle.

6. An arrangement according to any one of the preceding claims, **characterized in that** the supporting member (4) is wider at its ends than in the middle.

7. An arrangement according to any one of the preceding claims, **characterized in that** the supporting member (4) is curved in the transverse direction, and that the hoses (7) are fastened onto the concave surface of the supporting member (4).

8. An arrangement according to any one of the preceding claims, **characterized in that** the supporting member (4) is made of spring steel.

9. An arrangement according to any one of claims 1 to 7, **characterized in that** the ends of the supporting member (4) are formed of parts with a substantially identical cross-section, and that the middle part is more flexible than the ends.

## Patentansprüche

1. Anordnung zum Stützen von Schläuchen einer Gesteinsbohrmaschine, die einen Vorschubbalken (1), ein Stellglied (2), das entlang dem Vorschubbalken (1) gleitet, und Schläuche zwischen dem Vorschubbalken (1) und dem Stellglied (2) aufweist, **dadurch gekennzeichnet, dass** sie ein flacher länglicher Stützteil (4) aufweist, der von einem Ende gekoppelt ist, um sich mit dem Stellglied (2) zu bewegen, und der vom anderen Ende auf die Lauflänge des Stellglieds gekoppelt ist, so dass er hinsichtlich des Vorschubbalkens (1) unbeweglich ist und dass er von seinen Enden sich um Gelenke (3, 5) drehbar gekoppelt ist, die parallel mit seiner breiteren Fläche in Querrichtung sind, und dass der Abstand zwischen den Gelenken des Stützteils (4) zumindest die Hälfte der Lauflänge des Stellglieds beträgt, und dass die Schläuche (7) an dem Stützteil (4) wesentlich auf seine Länge befestigt werden.

2. Anordnung nach Anspruch 1, **dadurch gekennzeichnet, dass** der Stützteil (4) derart montiert ist, dass sich seine Enden auf den gegenüberliegenden Seiten des Stellglieds in Querrichtung befinden.

3. Anordnung nach Anspruch 1 oder 2, **dadurch gekennzeichnet, dass** die Schläuche (7) in einer einzigen Schicht in Querrichtung des Stützteils (4) angeordnet werden.

4. Anordnung nach einem der Ansprüche 1 bis 3, **dadurch gekennzeichnet, dass** der Stützteil (4) in Längsrichtung vorgebogen ist.

5. Anordnung nach einem der vorhergehenden Ansprüche, **dadurch gekennzeichnet, dass** der Stützteil (4) an seinen Enden dicker als in der Mitte ist.

6. Anordnung nach einem der vorhergehenden Ansprüche, **dadurch gekennzeichnet, dass** der Stützteil (4) an seinen Enden breiter als in der Mitte ist.

7. Anordnung nach einem der vorhergehenden Ansprüche, **dadurch gekennzeichnet, dass** der Stützteil (4) in Querrichtung bogenförmig ist und dass die Schläuche (7) an der konkaven Fläche des Stützteils (4) befestigt sind.

8. Anordnung nach einem der vorhergehenden Ansprüche, **dadurch gekennzeichnet, dass** der Stützteil (4) aus Federstahl hergestellt ist.

9. Anordnung nach einem der Ansprüche 1 bis 7, **dadurch gekennzeichnet, dass** die Enden des Stützteils (4) aus Teilen bestehen, die einen wesentlich identischen Querschnitt haben und dass der Mittelteil flexibler als die Enden ist.

## Revendications

1. Arrangement servant à supporter des flexibles d'un appareil de forage de rocher comportant une poutre d'avance (1), un actionneur (2) glissant sur la poutre d'avance (1) et des flexibles entre la poutre d'avance (1) et l'actionneur (2), **caractérisé en ce que** il comporte un élément de support (4) allongé plat, accroché par un premier bout de manière qu'il bouge avec l'actionneur (2), et par un second bout de manière qu'il reste immobile par rapport à la poutre d'avance (1), et qu'il est accroché par ses bouts de manière qu'il pivote autour des articulations (3, 5) parallèles à sa surface plus large dans le sens transversal, et que l'écartement des articulations de l'élément de support (4) est au moins la moitié du trajet de l'actionneur, et que les flexibles (7) sont fixés à l'élément de support (4) sensiblement tout le long de sa longueur.

2. Arrangement selon la revendication 1, **caractérisé en ce que** l'élément de support (4) est monté de telle manière que les bouts sont situés aux côtés opposés de l'actionneur dans le sens transversal.

3. Arrangement selon la revendication 1 ou 2, **caractérisé en ce que** les flexibles (7) ont été disposés à un seul niveau dans le sens transversal de l'élément de support (4).

4. Arrangement selon l'une quelconque des revendications de 1 à 3, **caractérisé en ce que** l'élément de support (4) est précourbé dans le sens longitudinal.

5. Arrangement selon l'une quelconque des revendications précédentes, **caractérisé en ce que** l'élément de support (4) est plus épais aux bouts qu'au milieu.

6. Arrangement selon l'une quelconque des revendications précédentes, **caractérisé en ce que** l'élément de support (4) est plus large aux bouts qu'au milieu.

7. Arrangement selon l'une quelconque des revendications précédentes, **caractérisé en ce que** l'élément de support (4) est courbé dans le sens transversal et que les flexibles (7) ont été fixés à la surface concave de l'élément de support (4).

8. Arrangement selon l'une quelconque des revendications précédentes, **caractérisé en ce que** l'élément de support (4) est en acier-ressort.

9. Arrangement selon l'une quelconque des revendications de 1 à 7, **caractérisé en ce que** les bouts de l'élément de support (4) présentent des coupes transversales sensiblement identiques et que la partie en milieu est plus flexible que les bouts.
